# EUROPEAN PATENT SPECIFICATION

(11) **EP 3 251 047 B1**
(45) Date of publication and mention of the grant of the patent: **02.06.2021**
(21) Application number: 15880495.5
(22) Date of filing: 30.01.2015
(51) Int. Cl.: G06F 21/55

(54) **PROTECTION AGAINST DATABASE INJECTION ATTACKS**
SCHUTZ GEGEN DATENBANKINJEKTIONSANGRIFFEN
PROTECTION CONTRE DES ATTAQUES PAR INJECTION DE BASE DE DONNÉES

(43) Date of publication of application: 06.12.2017
(73) Proprietor: Micro Focus LLC, Provo, UT 84606 (US)
(72) Inventor: NG, Ming Sum Sam, Hong Kong (CN); MIROSH, Oleksandr, Kiev 04070 (UA); MUTHURAJAN, Sasi Siddharth, Alpharetta, Georgia 30004 (US)
(74) Representative: HGF
(86) International application number: PCT/US2015/013798
(87) International publication number: WO 2016/122604

(56) References cited:
- WO-A2-2008/060722
- CN-U- 202 652 255
- US-A1- 2012 090 027
- US-A1- 2012 117 644
- US-B1- 7 444 331
- US-B1- 7 444 331
- US-B1- 8 046 374
- US-B1- 8 225 402
- US-B2- 8 010 522

## Description

### BACKGROUND

Database injection (e.g., SQL (Structured Query Language) injection) is a code injection technique that exploits a security vulnerability occurring in the database layer of an application. Database injection attacks may allow unauthorized retrieval and/or modification of data in a database, providing attackers with access to sensitive and otherwise secure data through manipulations of database queries. In a worst case scenario, such database injection may even allow the attacker to take full control of the database server. Relevant sources of prior art are CN202652255 and US7444331.

### BRIEF DESCRIPTION OF THE DRAWINGS

The following detailed description references the drawings, wherein:
FIG. 1 is a block diagram depicting an example environment in which various examples may be implemented as an injection attack protection system.
FIG. 2 is a block diagram depicting an example injection attack protection system.
FIG. 3 is a block diagram depicting an example machine-readable storage medium comprising instructions executable by a processor for protection against database injection attacks.
FIG. 4 is a block diagram depicting an example machine-readable storage medium comprising instructions executable by a processor for protection against database injection attacks.
FIG. 5 is a flow diagram depicting an example method for protection against database injection attacks.
FIG. 6 is a flow diagram depicting an example method for protection against database injection attacks.
FIG. 7 is a table depicting example database queries and corresponding normalized representations of the database queries.
FIG. 8 is a table depicting example database injections.

### DETAILED DESCRIPTION

The following detailed description refers to the accompanying drawings. Wherever possible, the same reference numbers are used in the drawings and the following description to refer to the same or similar parts. It is to be expressly understood, however, that the drawings are for the purpose of illustration and description only. While several examples are described in this document, modifications, adaptations, and other implementations are possible. Accordingly, the following detailed description does not limit the disclosed examples. Instead, the proper scope of the disclosed examples may be defined by the appended claims, which define the invention.

Database injection (e.g., SQL injection) is a code injection technique that exploits a security vulnerability occurring in the database layer of an application. Database injection attacks may allow unauthorized retrieval and/or modification of data in a database, providing attackers with access to sensitive and otherwise secure data through manipulations of database queries. In a worst case scenario, such database injection may even allow the attacker to take full control of the database server.

One way of detecting such database injection attacks may be through whitelists of potential database query structures built by a learning-based solution. However, the learning-based solution may produce false positives, meaning it incorrectly detects a benign input or database query as malicious, if the input or database query was not previously observed during learning mode. Such false positives may occur during the use of features of the website that were not sufficiently exercised during learning mode and features that were added or changed after learning mode concluded. Further, a learning-based solution may not provide full protection while in learning mode. It may also learn malicious input or database queries and thereby produce false negatives, meaning it fails to detect the input or database queries as malicious, when similar attacks are later observed.

Examples disclosed herein provide technical solutions to these technical challenges by implementing an enhanced learning-based solution that can shorten the learning phase and/or detect false positives and/or false negatives that are erroneously learned during the learning phase. The examples disclosed herein enable intercepting a current database query prior to being executed by a database management system (DBMS). The examples disclosed herein further enable determining whether the current database query is suspected of having a security threat of a database injection attack by comparing the current database query with past database queries that have been intercepted prior to the interception of the current database query, and in response to determining that the current database query is not suspected of having the security threat of the database injection attack, storing the current database query in an allowed query list.

The terminology used herein is for the purpose of describing particular embodiments only and is not intended to be limiting. As used herein, the singular forms "a," "an," and "the" are intended to include the plural forms as well, unless the context clearly indicates otherwise. The term "plurality," as used herein, is defined as two or more than two. The term "another," as used herein, is defined as at least a second or more. The term "coupled," as used herein, is defined as connected, whether directly without any intervening elements or indirectly with at least one intervening elements, unless otherwise indicated. Two elements can be coupled mechanically, electrically, or communicatively linked through a communication channel, pathway, network, or system. The term "and/or" as used herein refers to and encompasses any and all possible combinations of one or more of the associated listed items. It will also be understood that, although the terms first, second, third, etc. may be used herein to describe various elements, these elements should not be limited by these terms, as these terms are only used to distinguish one element from another unless stated otherwise or the context indicates otherwise. As used herein, the term "includes" means includes but not limited to, the term "including" means including but not limited to. The term "based on" means based at least in part on.

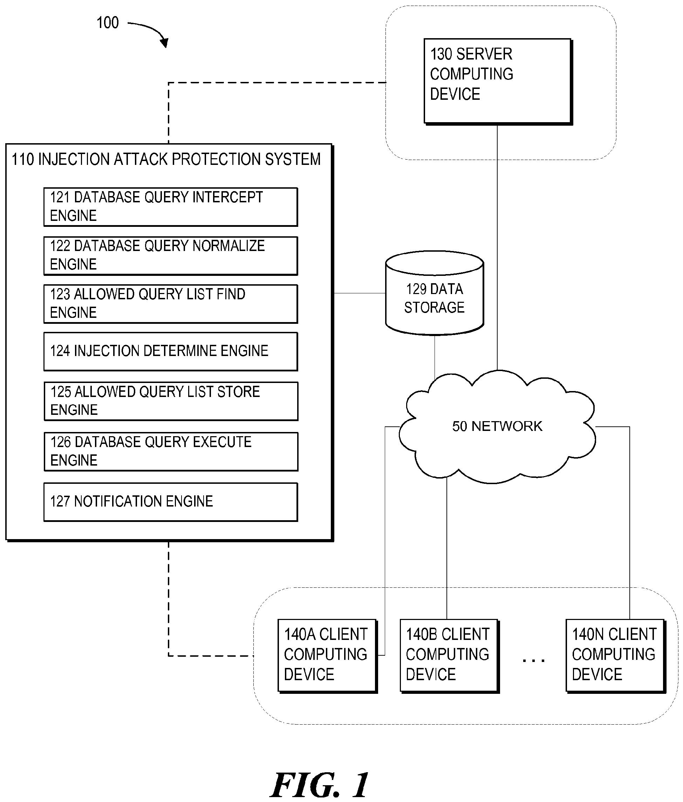

FIG. 1 is an example environment 100 in which various examples may be implemented as an injection attack protection system 110. Environment 100 may include various components including server computing device 130 and client computing devices 140 (illustrated as 140A, 140B, ..., 140N). Each client computing device 140A, 140B, ..., 140N may communicate requests to and/or receive responses from server computing device 130. Server computing device 130 may receive and/or respond to requests from client computing devices 140. Client computing devices 140 may be any type of computing device providing a user interface through which a user can interact with a software application. For example, client computing devices 140 may include a laptop computing device, a desktop computing device, an all-in-one computing device, a tablet computing device, a mobile phone, an electronic book reader, a network-enabled appliance such as a "Smart" television, and/or other electronic device suitable for displaying a user interface and processing user interactions with the displayed interface. While server computing device 130 is depicted as a single computing device, server computing device 130 may include any number of integrated or distributed computing devices serving at least one software application for consumption by client computing devices 140.

The various components (e.g., components 129, 130, and/or 140) depicted in FIG. 1 may be coupled to at least one other component via a network 50. Network 50 may comprise any infrastructure or combination of infrastructures that enable electronic communication between the components. For example, network 50 may include at least one of the Internet, an intranet, a PAN (Personal Area Network), a LAN (Local Area Network), a WAN (Wide Area Network), a SAN (Storage Area Network), a MAN (Metropolitan Area Network), a wireless network, a cellular communications network, a Public Switched Telephone Network, and/or other network. According to various implementations, injection attack protection system 110 and the various components described herein may be implemented in hardware and/or a combination of hardware and programming that configures hardware. Furthermore, in FIG. 1 and other Figures described herein, different numbers of components or entities than depicted may be used.

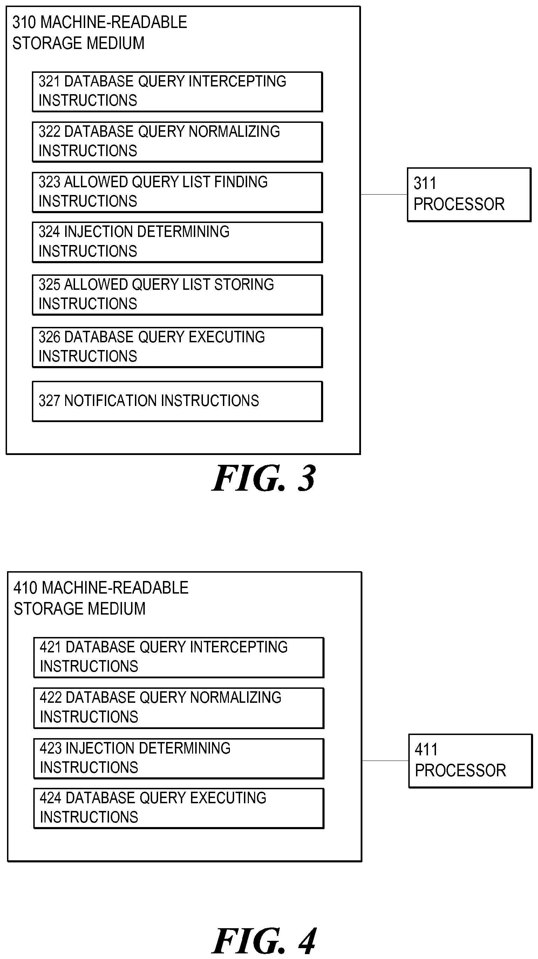

Injection attack protection system 110 may comprise a database query intercept engine 121, a database query normalize engine 122, an allowed query list find engine 123, an injection determine engine 124, an allowed query list store engine 125, a database query execute engine 126, a notification engine 127, and/or other engines. The term "engine", as used herein, refers to a combination of hardware and programming that performs a designated function. As is illustrated respect to FIGS. 3-4, the hardware of each engine, for example, may include one or both of a processor and a machine-readable storage medium, while the programming is instructions or code stored on the machine-readable storage medium and executable by the processor to perform the designated function.

Database query intercept engine 121 may intercept a current database query prior to being executed by a database management system (DBMS). The current database query may be intercepted at runtime. A "database query," as used herein, may refer to a request for data stored in a database such as a SQL query. "DBMS," as used herein, may refer to special-purpose software packages that are used to access the data stored in the database. As such, the DBMS processes or otherwise executes the database query that is made to the database by accessing requested data stored in the database. The current database query may be intercepted before the current database query is executed by the DBMS. In some implementations, the current database query and/or past database queries may be stored in a data storage (e.g., data storage 129). The past database queries may be made and/or intercepted before the current database query is intercepted.

Database query normalize engine 122 may normalize the current database query to generate a normalized current database query. The goal of the normalization may be to capture the basic structure and/or syntax of the database query rather than the query with query-specific parameters. The basic structure of the current database query may then be compared with the basic structure of any of the past database queries to determine whether there has been a database injection attack, which may be discussed in greater detail herein with respect to injection determine engine 124.

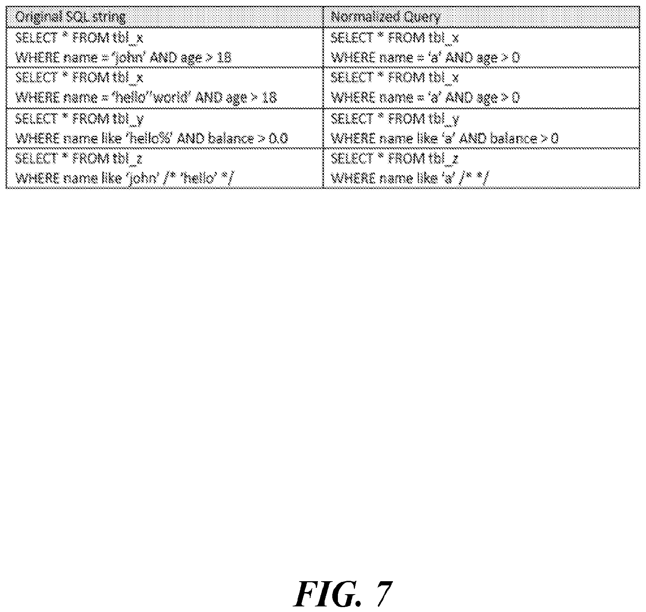

For example, the normalized current database query may be generated by replacing a string literal in the current database query with a designated character, replacing a number in the current database query with a designated number, replacing a comment in the current database query with a space, and/or following other normalization rules that remove query-specific parameters from the database query and/or replace them with designated characters, numbers, symbols, and/or a space. Similarly, the past database queries may be normalized and/or the normalized past database queries may be stored in the data storage (e.g., data storage 129). Example database queries and corresponding normalized representations of the database queries are illustrated in FIG. 7. In the examples illustrated in FIG. 7, all string literals of the example database queries may be replaced with a designated character 'a.' All numbers may be replaced with a designated number 0. All content inside line or block comments (e.g., /* .... */) may be replaced with a blank space. Any other normalization techniques may be used by database query normalize engine 122 to generate normalized representations of the database queries.

Allowed query list find engine 123 may determine whether the normalized current database query is found in an allowed query list (e.g., whitelist). An "allowed query list," as used herein, may refer to a list of database queries that have been classified to be benign (e.g., not malicious, not having database injection attacks, etc.). The list of database queries in the allowed query list may be in the normalized format as discussed herein with respect to database query normalize engine 122. The allowed query list may be dynamically updated as new database queries are intercepted and/or analyzed to determine whether the new database queries are suspected of having a security threat as a result of a database injection attack, which is discussed herein with respect to injection determine engine 124 and/or allowed query list store engine 125.

In some implementations, in response to determining that the normalized current database query is found in the allowed query list, the current database query (e.g., original database query before the normalization) may be allowed to be executed by the DBMS, which is discussed with respect to database query execute engine 126.

Injection determine engine 124 may determine whether the current database query is suspected of having a security threat as a result of a database injection attack. In doing so, injection determine engine 124 may compare the normalized current database query with the past database queries that have been intercepted prior to the interception of the current database query and that have been normalized. The normalized current database query may be compared with the normalized past database queries to determine whether the normalized current database query has any portion injected as a result of a database injection attack. In some implementations, the injected portion (e.g., attack data) may replace at least a portion of, add a new portion to, and/or remove at least a portion from a normalized past database query.

For example, injection determine engine 124 may identify, in at least one normalized past database query, the following data (but not limited to the following data) as a potential injection spot that a database injection attack may occur: (i) the content of all string literal (e.g., the content inside two single quotation marks); and (ii) all constant numbers (e.g., number 0). And, if any of the normalized past database queries can be transformed into the normalized current database query by injection (e.g., by injecting attack data into the identified injection spot that a database injection attack may occur), injection determine engine 124 may determine that the current normalized database query is suspected of having a security threat as a result of a database injection attack.

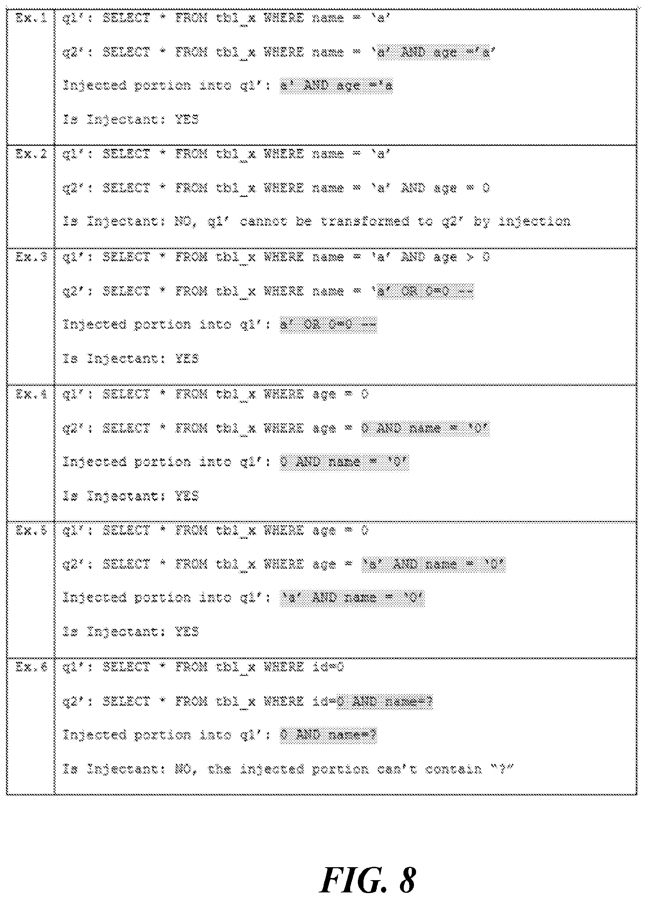

Example database injections are illustrated in FIG. 8. In the examples illustrated in FIG. 8, q1' may represent one of the normalized past database queries while q2' may represent the normalized current database query. q1' therefore was made and/or intercepted prior to the interception of q2'. q2' may be said to be an "injectant" of q1' if q1' can be transformed into q2' by injection. Refer to example 1 of FIG. 8, q1' can be transformed into q2' because the content (e.g., a) of the string literal of q1' can be replaced with the following injected portion (e.g., attack data), a' AND age='a. In example 2 of FIG. 8, q1' cannot be transformed into q2' by injection because the closed quotation mark of q1' is not part of q2' (e.g., the additional portion, a' AND age = 0, does not end with a closed quotation mark). On the other hand, in example 3 of FIG. 8, q1' can still be transformed into q2' by injection because the injected portion ends with a comment (e.g., --) that removes everything that comes after.

In example 4 of FIG. 8, q1' can be transformed into q2' because the constant number (e.g., 0) of q1' can be replaced with the following injected portion (e.g., attack data), 0 AND name = '0'. Similarly, in example 5 of FIG. 8, q1' can be transformed into q2' because the constant number (e.g., 0) of q1' can be replaced with the following injected portion (e.g., attack data), 'a' AND name =- '0'. On the other hand, in example 6 of FIG. 8, although q1' can be transformed into q2' by injection if the constant number (e.g., 0) of q1' is replaced with the injection portion, 0 AND name=?, this situation may be excluded because the symbol, ?, is parameter binding in SQL grammar. Thus, even if q2' may be a result of a database injection attack, it may not be executed successfully because the newly introduced parameter will not be bound by the application.

In some implementations, the determination of whether the current database query is suspected of having a security threat as a result of a database attack may be made in response to determining that the normalized current database query is not found in the allowed query list.

Allowed query list store engine 125 may store the current normalized database query in the allowed query list. In some implementations, the current normalized database query may be stored in the allowed query list in response to determining that the current database query is not suspected of having the security threat of the database injection attack (e.g., as determined by injection determine engine 124).

Database query execute engine 126 may allow and/or cause the current database query (e.g., original database query before the normalization) to be executed by the DBMS. For example, the once intercepted current database query may be routed back to the DBMS for execution and/or processing. In some implementations, the current database query may be executed in response to determining that the current database query is not suspected of having the security threat of the database security attack (e.g., as determined by injection determine engine 124). On the other hand, in response to determining that the current database query is suspected of having the security threat of the database injection attack (e.g., as determined by injection determine engine 124), the current database query may be prevented from being executed by the DBMS.

Notification engine 127 may generate a notification indicating that the current database query is suspected of having the security threat of the database injection attack in response to determining that the current database query is suspected of having the security threat of the database injection attack (e.g., as determined by injection determine engine 124). In some implementations, the notification may be generated in form of an indicator, a message, and/or an alert, which may be communicated to at least one user for further investigation on the current database query.

In some implementations, injection attack protection system 110 may operate in at least three different modes. During a first mode of operation (e.g., "Secure Learn" mode), injection attack protection system 110 may intercept a current database query prior to being executed by a DBMS (e.g., by database query intercept engine 121), normalize the current database query to generate a normalized current database query (e.g., by database query normalize engine 122), and determine whether the current database query is suspected of having a security threat as a result of a database injection attack by comparing the normalized current database query with past database queries that have been intercepted prior to the interception of the current database query and that have been normalized (e.g., by injection determine engine 124). In response to determining that the current database query is not suspected of having a security threat as a result of a database injection attack, injection attack protection system 110 may store the normalized current database query in an allowed query list (e.g., by allowed query list store engine 125) and/or allow the current database query to be executed by the DBMS (e.g., by database query execute engine 126).

Even when the current database query is suspected of having a security threat as a result of a database injection attack, injection attack protection system 110 may still allow the current database query to be executed by the DBMS during the first mode of the operation. In some cases, injection attack protection system 110 may generate a notification indicating that the current database query is suspected of having the security threat of the database injection attack (e.g., by notification engine 127).

During a second mode of operation (e.g., "Smart Active" mode), injection attack protection system 110 may intercept a current database query prior to being executed by a DBMS (e.g., by database query intercept engine 121) and normalize the current database query to generate a normalized current database query (e.g., by database query normalize engine 122). Injection attack protection system 110 may then determine whether the normalized current database query is found in an allowed query list (e.g., by allowed query list find engine 123). If found in the allowed query list, injection attack protection system 110 may allow the current database query to be executed by the DBMS (e.g., by database query execute engine 126). On the other hand, if not found in the allowed query list, injection attack protection system 110 may determine whether the current database query is suspected of having a security threat as a result of a database injection attack by comparing the normalized current database query with past database queries that have been intercepted prior to the interception of the current database query and that have been normalized (e.g., by injection determine engine 124).

In response to determining that the current database query is not suspected of having a security threat as a result of a database injection attack, injection attack protection system 110 may allow the current database query to be executed by the DBMS (e.g., by database query execute engine 126). On the other hand, in response to determining that the current database query is suspected of having a security threat as a result of a database injection attack, the current database query may be prevented from being execute by the DBMS, which is different from the first mode of the operation. In some cases, injection attack protection system 110 may generate a notification indicating that the current database query is suspected of having the security threat of the database injection attack (e.g., by notification engine 127).

During a third mode of operation (e.g., "Hybrid" mode), injection attack protection system 110 may intercept a current database query prior to being executed by a DBMS (e.g., by database query intercept engine 121) and normalize the current database query to generate a normalized current database query (e.g., by database query normalize engine 122). Injection attack protection system 110 may then determine whether the normalized current database query is found in an allowed query list (e.g., by allowed query list find engine 123). If found in the allowed query list, injection attack protection system 110 may allow the current database query to be executed by the DBMS (e.g., by database query execute engine 126). On the other hand, if not found in the allowed query list, injection attack protection system 110 may determine whether the current database query is suspected of having a security threat as a result of a database injection attack by comparing the normalized current database query with past database queries that have been intercepted prior to the interception of the current database query and that have been normalized (e.g., by injection determine engine 124).

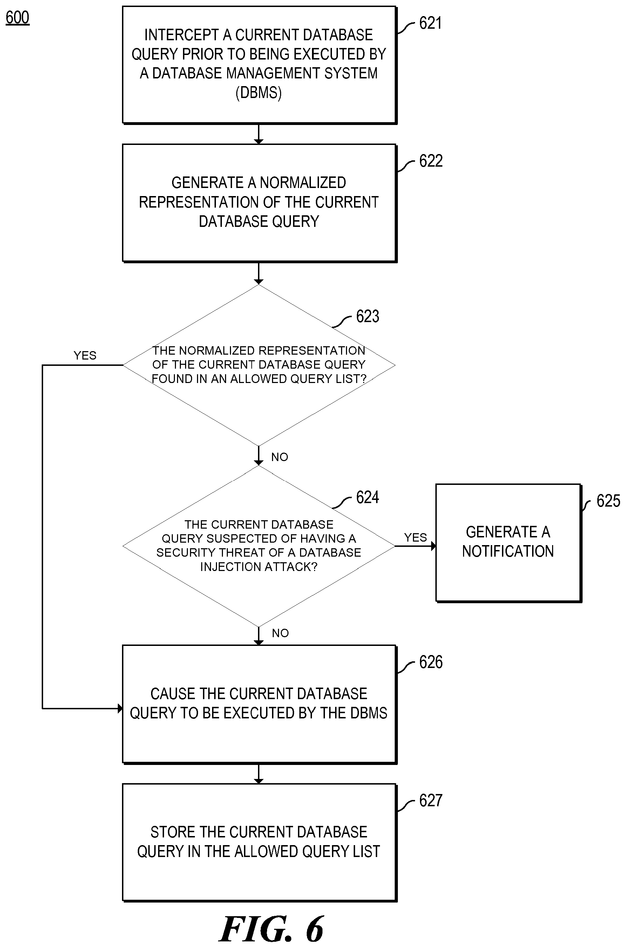

In response to determining that the current database query is not suspected of having a security threat as a result of a database injection attack, injection attack protection system 110 may allow the current database query to be executed by the DBMS (e.g., by database query execute engine 126) and/or store the normalized current database query in the allowed query list (e.g., by allowed query list store engine 125). On the other hand, in response to determining that the current database query is suspected of having a security threat as a result of a database injection attack, the current database query may be prevented from being execute by the DBMS, which is different from the first mode of the operation. In some cases, injection attack protection system 110 may generate a notification indicating that the current database query is suspected of having the security threat of the database injection attack (e.g., by notification engine 127). Note that the third mode of operation is illustrated in the flow diagram of FIG. 6.

In performing their respective functions, engines 121-127 may access data storage 129 and/or other suitable database(s). Data storage 129 may represent any memory accessible to injection attack protection system 110 that can be used to store and retrieve data. Data storage 129 and/or other database may comprise random access memory (RAM), read-only memory (ROM), electrically-erasable programmable read-only memory (EEPROM), cache memory, floppy disks, hard disks, optical disks, tapes, solid state drives, flash drives, portable compact disks, and/or other storage media for storing computer-executable instructions and/or data. Injection attack protection system 110 may access data storage 129 locally or remotely via network 50 or other networks.

Data storage 129 may include a database to organize and store data. Database 129 may be, include, or interface to, for example, an Oracle™ relational database sold commercially by Oracle Corporation. Other databases, such as Informix™, DB2 (Database 2) or other data storage, including file-based (e.g., comma or tab separated files), or query formats, platforms, or resources such as OLAP (On Line Analytical Processing), SQL (Structured Query Language), a SAN (storage area network), Microsoft Access™, MySQL, PostgreSQL, HSpace, Apache Cassandra, MongoDB, Apache CouchDB™, or others may also be used, incorporated, or accessed. The database may reside in a single or multiple physical device(s) and in a single or multiple physical location(s). The database may store a plurality of types of data and/or files and associated data or file description, administrative information, or any other data.

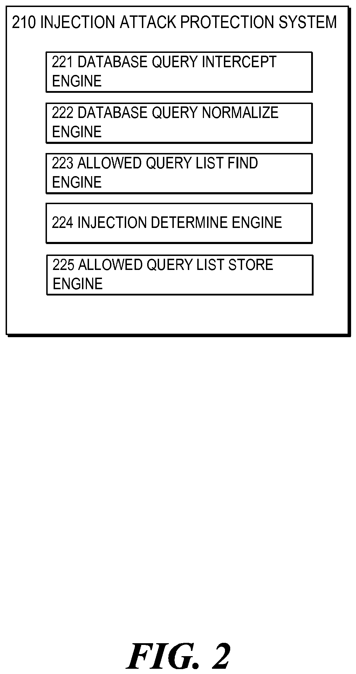

FIG. 2 is a block diagram depicting an example injection attack protection system 210. Injection attack protection system 210 may comprise a database query intercept engine 221, a database query normalize engine 222, an allowed query list find engine 223, an injection determine engine 224, an allowed query list store engine 225, and/or other engines. Engines 221-225 represent engines 121-125, respectively.

FIG. 3 is a block diagram depicting an example machine-readable storage medium 310 comprising instructions executable by a processor for protection against database injection attacks.

In the foregoing discussion, engines 121-127 were described as combinations of hardware and programming. Engines 121-127 may be implemented in a number of fashions. Referring to FIG. 3, the programming may be processor executable instructions 321-327 stored on a machine-readable storage medium 310 and the hardware may include a processor 311 for executing those instructions. Thus, machine-readable storage medium 310 can be said to store program instructions or code that when executed by processor 311 implements injection attack protection system 110 of FIG. 1.

In FIG. 3, the executable program instructions in machine-readable storage medium 310 are depicted as database query intercepting instructions 321, database query normalizing instruction 322, allowed query list finding instructions 323, injection determining instructions 324, allowed query list storing instructions 325, database query executing instructions 326, and notification instructions 327. Instructions 321-327 represent program instructions that, when executed, cause processor 311 to implement engines 121-127, respectively.

FIG. 4 is a block diagram depicting an example machine-readable storage medium 410 comprising instructions executable by a processor for protection against database injection attacks.

In the foregoing discussion, engines 121-127 were described as combinations of hardware and programming. Engines 121-127 may be implemented in a number of fashions. Referring to FIG. 4, the programming may be processor executable instructions 421-424 stored on a machine-readable storage medium 410 and the hardware may include a processor 411 for executing those instructions. Thus, machine-readable storage medium 410 can be said to store program instructions or code that when executed by processor 411 implements injection attack protection system 110 of FIG. 1.

In FIG. 4, the executable program instructions in machine-readable storage medium 410 are depicted as database query intercepting instructions 421, database query normalizing instructions 422, injection determining instructions 423, and database query executing instructions 424. Instructions 421-424 represent program instructions that, when executed, cause processor 411 to implement engines 121, 122, 124, and 126, respectively.

Machine-readable storage medium 310 (or machine-readable storage medium 410) may be any electronic, magnetic, optical, or other physical storage device that contains or stores executable instructions. In some implementations, machine-readable storage medium 310 (or machine-readable storage medium 410) may be a non-transitory storage medium, where the term "non-transitory" does not encompass transitory propagating signals. Machine-readable storage medium 310 (or machine-readable storage medium 410) may be implemented in a single device or distributed across devices. Likewise, processor 311 (or processor 411) may represent any number of processors capable of executing instructions stored by machine-readable storage medium 310 (or machine-readable storage medium 410). Processor 311 (or processor 411) may be integrated in a single device or distributed across devices. Further, machine-readable storage medium 310 (or machine-readable storage medium 410) may be fully or partially integrated in the same device as processor 311 (or processor 411), or it may be separate but accessible to that device and processor 311 (or processor 411).

In one example, the program instructions may be part of an installation package that when installed can be executed by processor 311 (or processor 411) to implement injection attack protection system 110. In this case, machine-readable storage medium 310 (or machine-readable storage medium 410) may be a portable medium such as a floppy disk, CD, DVD, or flash drive or a memory maintained by a server from which the installation package can be downloaded and installed. In another example, the program instructions may be part of an application or applications already installed. Here, machine-readable storage medium 310 (or machine-readable storage medium 410) may include a hard disk, optical disk, tapes, solid state drives, RAM, ROM, EEPROM, or the like.

Processor 311 may be at least one central processing unit (CPU), microprocessor, and/or other hardware device suitable for retrieval and execution of instructions stored in machine-readable storage medium 310. Processor 311 may fetch, decode, and execute program instructions 321-327, and/or other instructions. As an alternative or in addition to retrieving and executing instructions, processor 311 may include at least one electronic circuit comprising a number of electronic components for performing the functionality of at least one of instructions 321-327, and/or other instructions.

Processor 411 may be at least one central processing unit (CPU), microprocessor, and/or other hardware device suitable for retrieval and execution of instructions stored in machine-readable storage medium 410. Processor 411 may fetch, decode, and execute program instructions 421-424, and/or other instructions. As an alternative or in addition to retrieving and executing instructions, processor 411 may include at least one electronic circuit comprising a number of electronic components for performing the functionality of at least one of instructions 421-424, and/or other instructions.

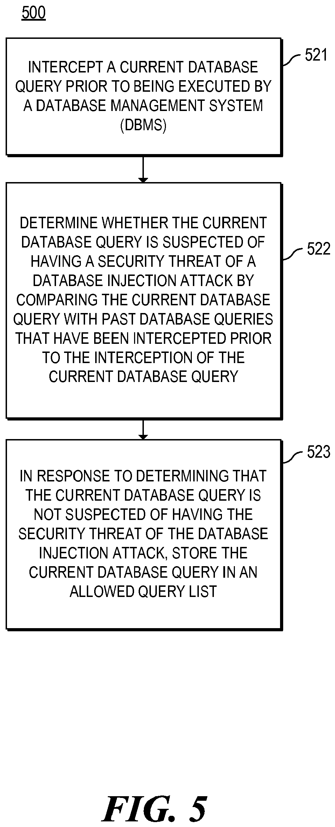

FIG. 5 is a flow diagram depicting an example method 500 for protection against database injection attacks. The various processing blocks and/or data flows depicted in FIG. 5 (and in the other drawing figures such as FIG. 6) are described in greater detail herein. The described processing blocks may be accomplished using some or all of the system components described in detail above and, in some implementations, various processing blocks may be performed in different sequences and various processing blocks may be omitted. Additional processing blocks may be performed along with some or all of the processing blocks shown in the depicted flow diagrams. Some processing blocks may be performed simultaneously. Accordingly, method 500 as illustrated (and described in greater detail below) is meant be an example and, as such, should not be viewed as limiting. Method 500 may be implemented in the form of executable instructions stored on a machine-readable storage medium, such as storage medium 310, and/or in the form of electronic circuitry.

In block 521, method 500 may include intercepting a current database query prior to being executed by a DBMS. The current database query may be intercepted at runtime.

In block 522, method 500 may include determining whether the current database query is suspected of having a security threat as a result of a database injection attack. In doing so, method 500 may compare the current database query with past database queries that have been intercepted prior to the interception of the current database query. In some implementations, the current database query may be compared with the past database queries to determine whether the current database query has any portion injected as a result of a database injection attack. For example, the injected portion may replace at least a portion of, add a new portion to, and/or remove at least a portion from a past database query. Note that the example database injections are illustrated in FIG. 8.

In block 523, method 500 may include storing the current database query in an allowed query list in response to determining that the current database query is not suspected of having the security threat of the database injection attack (e.g., as determined in block 522).

Referring back to FIG. 1, database query intercept engine 121 may be responsible for implementing block 521. Injection determine engine 124 may be responsible for implementing block 522. Allowed query list store engine 125 may be responsible for implementing block 523.

FIG. 6 is a flow diagram depicting an example method 600 for protection against database injection attacks. Method 600 as illustrated (and described in greater detail below) is meant be an example and, as such, should not be viewed as limiting. Method 600 may be implemented in the form of executable instructions stored on a machine-readable storage medium, such as storage medium 210, and/or in the form of electronic circuitry.

In block 621, method 600 may include intercepting a current database query prior to being executed by a DBMS. The current database query may be intercepted at runtime. Past database queries may have been intercepted prior to the interception of the current database query and/or stored in a database storage (e.g., data storage 129 of FIG. 1).

In block 622, method 600 may include generating a normalized representation of the current database query. The goal of the normalization may be to capture the basic structure and/or syntax of the database query rather than the query with query-specific parameters. The basic structure of the current database query may then be compared with the basic structure of any of the past database queries to determine whether there has been a database injection attack, which may be discussed in greater detail herein with respect to block 624.

For example, the normalized representation of the current database query may be generated by replacing a string literal in the current database query with a designated character, replacing a number in the current database query with a designated number, replacing a comment in the current database query with a space, and/or following other normalization rules that remove query-specific parameters from the database query and/or replace them with designated characters, numbers, symbols, and/or a space. Similarly, the past database queries may be normalized and/or the normalized representations of the past database queries may be stored in the data storage (e.g., data storage 129 of FIG. 1). Example database queries and corresponding normalized representations of the database queries are illustrated in FIG. 7.

In block 623, method 600 may include determining whether the normalized representation of the current database query is found in an allowed query list (e.g., whitelist). An "allowed query list," as used herein, may refer to a list of database queries that have been classified to be benign (e.g., not malicious, not having database injection attacks, etc.). The list of database queries in the allowed query list may be in the normalized format. The allowed query list may be dynamically updated as new database queries are intercepted and/or analyzed to determine whether the new database queries are suspected of having a security threat as a result of a database injection attack, which is discussed herein with respect to block 624 and/or block 627.

If method 600 determines that the normalized representation of the current database query is found in the allowed query list (block 623), method 600 may proceed to block 626 where the current database query may be executed by the DBMS. On the other hand, if method 600 determined that the normalized representation of the current database query is not found in the allowed query list (block 623), method 600 may proceed to block 624.

In block 624, method 600 may include determining whether the current database query is suspected of having a security threat as a result of a database injection attack. In doing so, method 600 may compare the normalized representation of the current database query with past database queries that have been intercepted prior to the interception of the current database query and that have been normalized. In some implementations, the normalized current database query may be compared with the normalized past database queries to determine whether the normalized current database query has any portion injected as a result of a database injection attack. For example, the injected portion may replace at least a portion of, add a new portion to, and/or remove at least a portion from a normalized past database query. Note that the example database injections are illustrated in FIG. 8.

If method 600 determines that the current database query is suspected of having a security threat as a result of a database injection attack, the current database query may be prevented from being executed by the DBMS. Method 600 may proceed to block 625 where a notification indicating that the current database query is suspected of having the security threat of the database injection attack is generated.

On the other hand, if method 600 determines that the current database query is not suspected of having a security threat as a result of a database injection attack, method 600 may proceed to block 626. In block 626, method 600 may include causing the current database query to be executed by the DBMS. In block 627, method 600 may include storing the current database query in the allowed query list.

Referring back to FIG. 1, database query intercept engine 121 may be responsible for implementing block 621. Database query normalize engine 122 may be responsible for implementing block 622. Allowed query list find engine 123 may be responsible for implementing block 623. Injection determine engine 124 may be responsible for implementing block 624. Allowed query list store engine 125 may be responsible for implementing block 627. Database query execute engine 126 may be responsible for implementing block 626. Notification engine 127 may be responsible for implementing block 625.

FIGS. 7-8 are discussed herein with respect to FIG. 1.

The foregoing disclosure describes a number of example implementations for protection against database injection attacks. The disclosed examples may include systems, devices, computer-readable storage media, and methods for protection against database injection attacks. For purposes of explanation, certain examples are described with reference to the components illustrated in FIGS. 1-4. The functionality of the illustrated components may overlap, however, and may be present in a fewer or greater number of elements and components.

Further, all or part of the functionality of illustrated elements may co-exist or be distributed among several geographically dispersed locations. Moreover, the disclosed examples may be implemented in various environments and are not limited to the illustrated examples. Further, the sequence of operations described in connection with FIGS. 5-6 are examples and are not intended to be limiting. Additional or fewer operations or combinations of operations may be used or may vary without departing from the scope of the disclosed examples. Furthermore, implementations consistent with the disclosed examples need not perform the sequence of operations in any particular order. Thus, the present disclosure merely sets forth possible examples of implementations, and many variations and modifications may be made to the described examples. All such modifications and variations are intended to be included within the scope of this disclosure and protected by the following claims.

## Claims

1. A method for protection against database injection attacks, the method comprising:
intercepting a first database query prior to being executed by a database management system (DBMS);
determining whether the first database query is found in an allowed query list;
in response to determining that the first database query is not found in the allowed query list, determining whether the first database query is suspected of having a security threat of a database injection attack by comparing the first database query with past database queries that have been intercepted prior to the interception of the first database query, wherein comparing the current database query with the past database queries comprises:
identifying a potential injection spot of in a given past database query of the past database queries, wherein the potential injection spot corresponds to a string literal or a constant number of the given past database query; and
determining that the first database query is suspected of having the security threat of the database injection attack if the given past database query could be transformed into the current database query by injecting data into the past database query at the potential injection spot;
in response to determining that the first database query is not suspected of having the security threat of the database injection attack, storing the first database query in the allowed query list;
intercepting a second database query prior to being executed by the database management system (DBMS);
determining whether the second database query is found in the allowed query list; and
in response to determining that the second database query is found in the allowed query list, causing the second database query to be executed by the DBMS.

2. The method of claim 1, further comprising:
in response to determining that the first database query is not suspected of having the security threat of the database injection attack, causing the first database query to be executed by the DBMS.

3. The method of claim 1, further comprising:
generating a normalized representation of the first database query by at least one of:
replacing a string literal in the first database query with a designated character,
replacing a number in the first database query with a designated number, and
replacing a comment in the first database query with a space.

4. The method of claim 3, wherein:
determining whether the first database query is found in the allowed query list comprises determining whether the normalized representation of the first database query is found in the allowed query list.

5. The method of claim 1, further comprising generating a normalized representation of the second database query, and wherein determining whether the second database query is found in an allowed query list comprises:
determining whether the normalized representation of the second database query is found in the allowed query list.

6. The method of claim 1, further comprising:
intercepting a third database query prior to being executed by a database management system (DBMS);
determining whether the third database query is found in an allowed query list;
in response to determining that the third database query is not found in the allowed query list, determining whether the third database query is suspected of having a security threat of a database injection attack by comparing the third database query with past database queries that have been intercepted prior to the interception of the third database query; and
in response to determining that the third database query has the injected portion, determining that the third database query is suspected of having the security threat of the database injection attack.

7. The method of claim 6, further comprising:
generating a normalized representation of the third database query, wherein
comparing the third database query with past database queries comprises comparing the normalized representation of the third database query with normalized representations of the past database queries, and
determining whether the third database query is suspected of having a security threat of a database injection attack comprises determining whether the normalized representation of the third database query has an injected portion based on the comparison.

8. The method of claim 7, further comprising:
in response to determining that the normalized representation of the third database query has the injected portion, generating a notification indicating that the third database query is suspected of having the security threat of the database injection attack.

9. The method of claim 7, further comprising:
in response to determining that the normalized representation of the third database query has any injected portion, preventing the third database query from being executed by the DBMS during a first mode of operation or allow the third database query to be executed by the DBMS during a second mode of operation.

10. The method of claim 1, wherein determining whether the first database query is suspected of having a security threat of a database injection attack comprises:
generating a normalized representation of the first database query, and
determining whether the normalized representation of the first database query has an injected portion that replaces at least a portion of, adds a new portion to, and/or removes at least a portion from the past database queries.

11. A non-transitory machine-readable storage medium comprising instructions executable by a processor of a computing device for protection against database injection attacks, the machine-readable storage medium comprising instructions to cause the processor to perform the method of any preceding claim.

12. A system for protection against database injection attacks comprising:
a processor that:
intercepts a first database query prior to being executed by a database management system (DBMS);
determines whether the first database query is found in an allowed query list;
in response to determining that the first database query is not found in the allowed query list, determines whether the first database query is suspected of having a security threat of a database injection attack by comparing the first database query with past database queries that have been intercepted prior to the interception of the first database query, wherein comparing the current database query with the past database queries comprises:
identifying a potential injection spot of in a given past database query of the past database queries, wherein the potential injection spot corresponds to a string literal or a constant number of the given past database query; and
determining that the first database query is suspected of having the security threat of the database injection attack if the given past database query could be transformed into the current database query by injecting data into the past database query at the potential injection spot;
in response to determining that the first database query is not suspected of having the security threat of the database injection attack, stores the first database query in the allowed query list
intercepts a second database query prior to being executed by the database management system (DBMS);
determines whether the second database query is found in an allowed query list; and
in response to determining that the second database query is found in the allowed query list, causes the second database query to be executed by the DBMS.

13. The system of claim 12, the processor that:
in response to determining that the first database query is not suspected of having the security threat of the database injection attack, causes the first database query to be executed by the DBMS.

14. The system of claim 12, the processor that:
in response to determining that the first database query is suspected of having the security threat of the database injection attack, prevents the first database query from being executed by the DBMS.

15. The system of claim 12, the processor that:
in response to determining that the first database query is suspected of having the security threat of the database injection attack, generates a notification indicating that the first database query is suspected of having the security threat of the database injection attack.

## Patentansprüche

1. Verfahren für einen Schutz vor Datenbankeinschleusungsangriffen, wobei das Verfahren Folgendes umfasst:
Abfangen einer ersten Datenbankabfrage, bevor sie durch ein Datenbankverwaltungssystem (*database management system* - DBMS) ausgeführt wird;
Bestimmen, ob die erste Datenbankabfrage in einer Liste zulässiger Abfragen gefunden wird;
als Reaktion auf das Bestimmen, dass die erste Datenbankabfrage nicht in der Liste zulässiger Abfragen gefunden wird, Bestimmen, ob bei der ersten Datenbankabfrage eine Sicherheitsbedrohung durch einen Datenbankeinschleusungsangriff vermutet wird, durch Vergleichen der ersten Datenbankabfrage mit früheren Datenbankabfragen, die vor dem Abfangen der ersten Datenbankabfrage abgefangen wurden, wobei das Vergleichen der aktuellen Datenbankabfrage mit den früheren Datenbankabfragen Folgendes umfasst:
Identifizieren eines potenziellen Einschleusungspunkts in einer gegebenen früheren Datenbankabfrage der früheren Datenbankabfragen, wobei der potenzielle Einschleusungspunkt einem Zeichenfolgenliteral oder einer konstanten Zahl der gegebenen früheren Datenbankabfrage entspricht; und
Bestimmen, dass bei der ersten Datenbankabfrage eine Sicherheitsbedrohung durch den Datenbankeinschleusungsangriff vermutet wird, wenn die gegebene frühere Datenbankabfrage in die aktuelle Datenbankabfrage umgewandelt werden könnte, durch Einschleusen von Daten in die frühere Datenbankabfrage an dem potenziellen Einschleusungspunkt;
als Reaktion auf das Bestimmen, dass bei der ersten Datenbankabfrage keine Sicherheitsbedrohung durch den Datenbankeinschleusungsangriff vermutet wird, Speichern der ersten Datenbankabfrage in der Liste zulässiger Abfragen;
Abfangen einer zweiten Datenbankabfrage, bevor sie durch das Datenbankverwaltungssystem (DBMS) ausgeführt wird;
Bestimmen, ob die zweite Datenbankabfrage in der Liste zulässiger Abfragen gefunden wird; und
als Reaktion auf das Bestimmen, dass die zweite Datenbankabfrage in der Liste zulässiger Abfragen gefunden wird, Veranlassen, dass die zweite Datenbankabfrage durch das DBMS ausgeführt wird.

2. Verfahren nach Anspruch 1, das ferner Folgendes umfasst:
als Reaktion auf das Bestimmen, dass bei der ersten Datenbankabfrage keine Sicherheitsbedrohung durch den Datenbankeinschleusungsangriff vermutet wird, Veranlassen, dass die erste Datenbankabfrage durch das DBMS ausgeführt wird.

3. Verfahren nach Anspruch 1, das ferner Folgendes umfasst:
Erzeugen einer normalisierten Darstellung der ersten Datenbankabfrage durch Folgendes:
Ersetzen eines Zeichenfolgenliterals in der ersten Datenbankabfrage durch ein festgelegtes Zeichen,
Ersetzen einer Zahl in der ersten Datenbankabfrage durch eine festgelegte Zahl und/oder
Ersetzen eines Kommentars in der ersten Datenbankabfrage durch ein Leerzeichen.

4. Verfahren nach Anspruch 3, wobei:
das Bestimmen, ob die erste Datenbankabfrage in der Liste zulässiger Abfragen gefunden wird, das Bestimmen umfasst, ob die normalisierte Darstellung der ersten Datenbankabfrage in der Liste zulässiger Abfragen gefunden wird.

5. Verfahren nach Anspruch 1, das ferner das Erzeugen einer normalisierten Darstellung der zweiten Datenbankabfrage umfasst und wobei das Bestimmen, ob die zweite Datenbankabfrage in einer Liste zulässiger Abfragen gefunden wird, Folgendes umfasst:
Bestimmen, ob die normalisierte Darstellung der zweiten Datenbankabfrage in der Liste zulässiger Abfragen gefunden wird.

6. Verfahren nach Anspruch 1, das ferner Folgendes umfasst:
Abfangen einer dritten Datenbankabfrage, bevor sie durch ein Datenbankverwaltungssystem (DBMS) ausgeführt wird;
Bestimmen, ob die dritte Datenbankabfrage in einer Liste zulässiger Abfragen gefunden wird;
als Reaktion auf das Bestimmen, dass die dritte Datenbankabfrage nicht in der Liste zulässiger Abfragen gefunden wird, Bestimmen, ob bei der dritten Datenbankabfrage eine Sicherheitsbedrohung durch einen Datenbankeinschleusungsangriff vermutet wird, durch Vergleichen der dritten Datenbankabfrage mit früheren Datenbankabfragen, die vor dem Abfangen der dritten Datenbankabfrage abgefangen wurden; und
als Reaktion auf das Bestimmen, dass die dritte Datenbankabfrage den eingeschleusten Abschnitt aufweist, Bestimmen, dass bei der dritten Datenbankabfrage die Sicherheitsbedrohung durch den Datenbankeinschleusungsangriff vermutet wird.

7. Verfahren nach Anspruch 6, das ferner Folgendes umfasst:
Erzeugen einer normalisierten Darstellung der dritten Datenbankabfrage, wobei
das Vergleichen der dritten Datenbankabfrage mit früheren Datenbankabfragen das Vergleichen der normalisierten Darstellung der dritten Datenbankabfrage mit normalisierten Darstellungen der früheren Datenbankabfragen umfasst, und
das Bestimmen, ob bei der dritten Datenbankabfrage eine Sicherheitsbedrohung durch einen Datenbankeinschleusungsangriff vermutet wird, das Bestimmen, ob die normalisierte Darstellung der dritten Datenbankabfrage einen eingeschleusten Abschnitt aufweist, basierend auf dem Vergleich umfasst.

8. Verfahren nach Anspruch 7, das ferner Folgendes umfasst:
als Reaktion auf das Bestimmen, dass die normalisierte Darstellung der dritten Datenbankabfrage den eingeschleusten Abschnitt aufweist, Erzeugen einer Benachrichtigung, die angibt, dass bei der dritten Datenbankabfrage die Sicherheitsbedrohung durch den Datenbankeinschleusungsangriff vermutet wird.

9. Verfahren nach Anspruch 7, das ferner Folgendes umfasst:
als Reaktion auf das Bestimmen, dass die normalisierte Darstellung der dritten Datenbankabfrage einen eingeschleusten Abschnitt aufweist, Verhindern, dass die dritte Datenbankabfrage während eines ersten Betriebsmodus durch das DBMS ausgeführt wird, oder Zulassen, dass die dritte Datenbankabfrage während eines zweiten Betriebsmodus durch das DBMS ausgeführt wird.

10. Verfahren nach Anspruch 1, wobei das Bestimmen, ob bei der ersten Datenbankabfrage eine Sicherheitsbedrohung eines Datenbankeinschleusungsangriffs vermutet wird, Folgendes umfasst:
Erzeugen einer normalisierten Darstellung der ersten Datenbankabfrage und
Bestimmen, ob die normalisierte Darstellung der ersten Datenbankabfrage einen eingeschleusten Abschnitt aufweist, der wenigstens einen Abschnitt der früheren Datenbankabfrage ersetzt, einen neuen Abschnitt zu der früheren Datenbankabfrage hinzufügt und/oder wenigstens einen Abschnitt aus den früheren Datenbankabfragen entfernt.

11. Nicht flüchtiges maschinenlesbares Speichermedium, das Anweisungen umfasst, die durch einen Prozessor einer Rechenvorrichtung für den Schutz vor Datenbankeinschleusungsangriffen ausführbar sind, wobei das maschinenlesbare Speichermedium Anweisungen umfasst, die den Prozessor veranlassen, das Verfahren nach einem der vorhergehenden Ansprüche durchzuführen.

12. System für den Schutz vor Datenbankeinschleusungsangriffen, das Folgendes umfasst:
einen Prozessor, der Folgendes ausübt:
Abfangen einer ersten Datenbankabfrage, bevor sie durch ein Datenbankverwaltungssystem (DBMS) ausgeführt wird;
Bestimmen, ob die erste Datenbankabfrage in einer Liste zulässiger Abfragen gefunden wird;
als Reaktion auf das Bestimmen, dass die erste Datenbankabfrage nicht in der Liste zulässiger Abfragen gefunden wird, Bestimmen, ob bei der ersten Datenbankabfrage eine Sicherheitsbedrohung durch einen Datenbankeinschleusungsangriff vermutet wird, durch Vergleichen der ersten Datenbankabfrage mit früheren Datenbankabfragen, die vor dem Abfangen der ersten Datenbankabfrage abgefangen wurden, wobei das Vergleichen der aktuellen Datenbankabfrage mit den früheren Datenbankabfragen Folgendes umfasst:
Identifizieren eines potenziellen Einschleusungspunkts in einer gegebenen früheren Datenbankabfrage der früheren Datenbankabfragen, wobei der potenzielle Einschleusungspunkt einem Zeichenfolgenliteral oder einer konstanten Zahl der gegebenen früheren Datenbankabfrage entspricht; und
Bestimmen, dass bei der ersten Datenbankabfrage eine Sicherheitsbedrohung durch den Datenbankeinschleusungsangriff vermutet wird, wenn die gegebene frühere Datenbankabfrage in die aktuelle Datenbankabfrage umgewandelt werden könnte, durch Einschleusen von Daten in die frühere Datenbankabfrage an dem potenziellen Einschleusungspunkt;
als Reaktion auf das Bestimmen, dass bei der ersten Datenbankabfrage keine Sicherheitsbedrohung durch den Datenbankeinschleusungsangriff vermutet wird, Speichern der ersten Datenbankabfrage in der Liste zulässiger Abfragen
Abfangen einer zweiten Datenbankabfrage, bevor sie durch das Datenbankverwaltungssystem (DBMS) ausgeführt wird;
Bestimmen, ob die zweite Datenbankabfrage in einer Liste zulässiger Abfragen gefunden wird; und
als Reaktion auf das Bestimmen, dass die zweite Datenbankabfrage in der Liste zulässiger Abfragen gefunden wird, Veranlassen, dass die zweite Datenbankabfrage durch das DBMS ausgeführt wird.

13. System nach Anspruch 12, wobei der Prozessor Folgendes ausübt:
als Reaktion auf das Bestimmen, dass bei der ersten Datenbankabfrage keine Sicherheitsbedrohung durch den Datenbankeinschleusungsangriff vermutet wird, Veranlassen, dass die erste Datenbankabfrage durch das DBMS ausgeführt wird.

14. System nach Anspruch 12, wobei der Prozessor Folgendes ausübt:
als Reaktion auf das Bestimmen, dass bei der ersten Datenbankabfrage die Sicherheitsbedrohung durch den Datenbankeinschleusungsangriff vermutet wird, Verhindern, dass die erste Datenbankabfrage durch das DBMS ausgeführt wird.

15. System nach Anspruch 12, wobei der Prozessor Folgendes ausübt:
als Reaktion auf das Bestimmen, dass bei der ersten Datenbankabfrage die Sicherheitsbedrohung durch den Datenbankeinschleusungsangriff vermutet wird, Erzeugen einer Benachrichtigung, die angibt, dass bei der ersten Datenbankabfrage die Sicherheitsbedrohung durch den Datenbankeinschleusungsangriff vermutet wird.

## Revendications

1. Procédé destiné à la protection contre des attaques par injection de base de données, le procédé comprenant :
l'interception d'une première requête de base de données avant d'être exécutée par un système de gestion de base de données (SGBD) ;
la détermination du fait de savoir si la première requête de base de données se trouve dans une liste de requêtes autorisées ;
en réponse à la détermination selon laquelle la première requête de base de données ne se trouve pas dans la liste de requêtes autorisées, la détermination du fait de savoir si la première requête de base de données est soupçonnée de présenter une menace de sécurité d'une attaque par injection de base de données en comparant la première requête de base de données avec des requêtes de base de données passées qui ont été interceptées avant l'interception de la première requête de base de données, la comparaison de la requête de base de données actuelle avec les requêtes de base de données passées comprenant :
l'identification d'un point d'injection potentiel dans une requête de base de données passée donnée des requêtes de base de données passées, le point d'injection potentiel correspondant à un littéral chaîne ou à un nombre constant de la requête de base de données passée donnée ; et
la détermination selon laquelle la première requête de base de données est soupçonnée de présenter la menace de sécurité de l'attaque par injection de base de données si la requête de base de données passée donnée pouvait être transformée en requête de base de données actuelle en injectant des données dans la requête de base de données passée au point d'injection potentiel ;
en réponse à la détermination selon laquelle la première requête de base de données n'est pas soupçonnée de présenter la menace de sécurité de l'attaque par injection de base de données, le stockage de la première requête de base de données dans la liste de requêtes autorisées ;
l'interception d'une deuxième requête de base de données avant d'être exécutée par le système de gestion de base de données (SGBD) ;
la détermination du fait de savoir si la deuxième requête de base de données se trouve dans la liste de requêtes autorisées ; et
en réponse à la détermination selon laquelle la deuxième requête de base de données se trouve dans la liste de requêtes autorisées, le fait d'amener la deuxième requête de base de données à être exécutée par le SGBD.

2. Procédé selon la revendication 1, comprenant en outre :
en réponse à la détermination selon laquelle la première requête de base de données n'est pas soupçonnée de présenter la menace de sécurité de l'attaque par injection de base de données, le fait d'amener la première requête de base de données à être exécutée par le SGBD.

3. Procédé selon la revendication 1, comprenant en outre :
la génération d'une représentation normalisée de la première requête de base de données par au moins l'un parmi :
le remplacement d'un littéral chaîne dans la première requête de base de données par un caractère désigné,
le remplacement d'un nombre dans la première requête de base de données par un nombre désigné, et
le remplacement d'un commentaire dans la première requête de base de données par un espace.

4. Procédé selon la revendication 3, dans lequel :
la détermination du fait de savoir si la première requête de base de données se trouve dans la liste de requêtes autorisées comprend la détermination du fait de savoir si la représentation normalisée de la première requête de base de données se trouve dans la liste de requêtes autorisées.

5. Procédé selon la revendication 1, comprenant en outre la génération d'une représentation normalisée de la deuxième requête de base de données, et dans lequel la détermination du fait de savoir si la deuxième requête de base de données se trouve dans une liste de requêtes autorisées comprend :
la détermination du fait de savoir si la représentation normalisée de la deuxième requête de base de données se trouve dans la liste de requêtes autorisées.

6. Procédé selon la revendication 1, comprenant en outre :
l'interception d'une troisième requête de base de données avant d'être exécutée par un système de gestion de base de données (SGBD) ;
la détermination du fait de savoir si la troisième requête de base de données se trouve dans une liste de requêtes autorisées ;
en réponse à la détermination selon laquelle la troisième requête de base de données ne se trouve pas dans la liste de requêtes autorisées, la détermination du fait de savoir si la troisième requête de base de données est soupçonnée de présenter une menace de sécurité d'une attaque par injection de base de données en comparant la troisième requête de base de données avec des requêtes de base de données passées qui ont été interceptées avant l'interception de la troisième requête de base de données ; et
en réponse à la détermination selon laquelle la troisième requête de base de données présente la partie injectée, la détermination selon laquelle la troisième requête de base de données est soupçonnée de présenter la menace de sécurité de l'attaque par injection de base de données.

7. Procédé selon la revendication 6, comprenant en outre :
la génération d'une représentation normalisée de la troisième requête de base de données,
la comparaison de la troisième requête de base de données avec des requêtes de base de données passées comprenant la comparaison de la représentation normalisée de la troisième requête de base de données avec des représentations normalisées des requêtes de base de données passées, et
la détermination du fait de savoir si la troisième requête de base de données est soupçonnée de présenter une menace de sécurité d'une attaque par injection de base de données comprenant la détermination du fait de savoir si la représentation normalisée de la troisième requête de base de données présente une partie injectée sur la base de la comparaison.

8. Procédé selon la revendication 7, comprenant en outre :
en réponse à la détermination selon laquelle la représentation normalisée de la troisième requête de base de données présente la partie injectée, la génération d'une notification indiquant que la troisième requête de base de données est soupçonnée de présenter la menace de sécurité de l'attaque par injection de base de données.

9. Procédé selon la revendication 7, comprenant en outre :
en réponse à la détermination selon laquelle la représentation normalisée de la troisième requête de base de données présente une partie injectée quelconque, le fait d'empêcher la troisième requête de base de données d'être exécutée par le SGBD pendant un premier mode de fonctionnement ou le fait de permettre à la troisième requête de base de données d'être exécutée par le SGBD pendant un second mode de fonctionnement.

10. Procédé selon la revendication 1, dans lequel la détermination du fait de savoir si la première requête de base de données est soupçonnée de présenter une menace de sécurité d'une attaque par injection de base de données comprend :
la génération d'une représentation normalisée de la première requête de base de données, et
la détermination du fait de savoir si la représentation normalisée de la première requête de base de données présente une partie injectée qui remplace au moins une partie des, ajoute une nouvelle partie aux et/ou supprime au moins une partie des requêtes de base de données passées.

11. Support de stockage non transitoire lisible par machine comprenant des instructions exécutables par un processeur d'un dispositif informatique destiné à la protection contre des attaques par injection de base de données, le support de stockage lisible par machine comprenant des instructions pour amener le processeur à effectuer le procédé selon l'une quelconque des revendications précédentes.

12. Système destiné à protéger contre des attaques par injection de base de données comprenant :
un processeur qui :
intercepte une première requête de base de données avant d'être exécutée par un système de gestion de base de données (SGBD) ;
détermine si la première requête de base de données se trouve dans une liste de requêtes autorisées ;
en réponse à la détermination selon laquelle la première requête de base de données ne se trouve pas dans la liste de requêtes autorisées, détermine si la première requête de base de données est soupçonnée de présenter une menace de sécurité d'une attaque par injection de base de données en comparant la première requête de base de données avec les requêtes de base de données passées qui ont été interceptées avant l'interception de la première requête de base de données, la comparaison de la requête de base de données actuelle avec les requêtes de base de données passées comprenant :
l'identification d'un point d'injection potentiel dans une requête de base de données passée donnée des requêtes de base de données passées, le point d'injection potentiel correspondant à un littéral chaîne ou à un nombre constant de la requête de base de données passée donnée ; et
la détermination selon laquelle la première requête de base de données est soupçonnée de présenter la menace de sécurité de l'attaque par injection de base de données si la requête de base de données passée donnée pouvait être transformée en requête de base de données actuelle en injectant des données dans la requête de base de données passée au point d'injection potentiel ;
en réponse à la détermination selon laquelle la première requête de base de données n'est pas soupçonnée de présenter la menace de sécurité de l'attaque par injection de base de données, stocke la première requête de base de données dans la liste de requêtes autorisées
intercepte une deuxième requête de base de données avant d'être exécutée par le système de gestion de base de données (SGBD) ;
détermine si la deuxième requête de base de données se trouve dans une liste de requêtes autorisées ; et
en réponse à la détermination selon laquelle la deuxième requête de base de données se trouve dans la liste de requêtes autorisées, amène la deuxième requête de base de données à être exécutée par le SGBD.

13. Système selon la revendication 12, le processeur qui :
en réponse à la détermination selon laquelle la première requête de base de données n'est pas soupçonnée de présenter la menace de sécurité de l'attaque par injection de base de données, amène la première requête de base de données à être exécutée par le SGBD.

14. Système selon la revendication 12, le processeur qui :
en réponse à la détermination selon laquelle la première requête de base de données est soupçonnée de présenter la menace de sécurité de l'attaque par injection de base de données, empêche la première requête de base de données d'être exécutée par le SGBD.

15. Système selon la revendication 12, le processeur qui :
en réponse à la détermination selon laquelle la première requête de base de données est soupçonnée de présenter la menace de sécurité de l'attaque par injection de base de données, génère une notification indiquant que la première requête de base de données est soupçonnée de présenter la menace de sécurité de l'attaque par injection de base de données.
